# FASCICULE DE BREVET EUROPEEN

(11) **EP 2 009 294 B1**
(45) Date de publication et mention de la délivrance du brevet: **22.12.2010**
(21) Numéro de dépôt: 08156642.4
(22) Date de dépôt: 21.05.2008
(51) Int. Cl.: F16B 7/04

(54) **Dispositif de liaison télescopique entre une perche et un embout**
Vorrichtung zur Teleskopverbindung zwischen einer Stange und einem Anschlussstück
Telescopic linking device between a pole and a nozzle

(30) Priorité: 21.05.2007 FR 0755151
(43) Date de publication de la demande: 31.12.2008
(73) Titulaire: Nespoli Engineering Kereskedelmi Korlatolt Fedelossegu Tarsagag (Kft), 1031 Budapest (HU)
(72) Inventeur: Nespoli, Alessandro, 23896 LC Sirtori (IT)
(74) Mandataire: Texier, Christian

(56) Documents cités:
- WO-A-01/54867
- DK-U3- 9 500 108
- NL-C2- 1 021 550
- US-A- 5 462 380

## Description

La présente invention concerne le domaine des dispositifs de liaison télescopique entre un embout ou un accessoire et l'extrémité d'une perche.

La présente invention s'applique notamment, mais non exclusivement, à la fixation d'un manche de support de rouleau pour peinture ou de pinceau sur l'extrémité d'une perche de rallonge.

Dans ce contexte, l'invention a pour but de faciliter l'opération de revêtement sur des zones difficiles d'accès, à l'aide du pinceau ou du rouleau fixé sur ladite perche.

De nombreux moyens ont déjà été proposés pour assurer une telle fixation d'un accessoire sur l'extrémité d'une perche.

En particulier, on a proposé des moyens permettant l'engagement télescopique de deux éléments tubulaires de diamètres complémentaires associés à un moyen de verrouillage comprenant un orifice sur l'un des éléments tubulaires et sur l'autre élément tubulaire un plot sollicité élastiquement pour prendre position dans l'orifice quand les deux éléments tubulaires sont engagés.

Ainsi, lorsque le plot prévu sur l'un des éléments prend position dans l'orifice prévu sur l'autre élément, ces deux éléments sont verrouillés en position. Pour libérer les deux éléments, il suffit de solliciter le plot à l'encontre de l'effort exercé par les moyens élastiques associés, pour rétracter le plot.

On trouvera des exemples de tels moyens connus dans les documents US 6 952 862, US 2 501 940, US 4 247 216, US 4 911 034, US 5 168 693, US 5 375 938, US 5 590 974, US 5 779 386, US 6 292 979, US 6 315 488, DK 95 00108 et WO 01/51257.

Les moyens ainsi proposés ont déjà rendu de grands services, cependant ils ne donnent pas toujours totalement satisfaction.

En particulier, l'on connaît aujourd'hui une forte tendance à généraliser l'utilisation de matériaux thermoplastiques. Plus précisément, le monde industriel souhaite de nos jours réaliser les plots et moyens élastiques associés pré-cités sous forme d'un plot en saillie sur l'extrémité d'une languette venue de matière sur un élément tubulaire, en utilisant l'élasticité intrinsèque du matériau thermoplastique pour solliciter élastiquement le plot vers une position de repos propre à pénétrer dans ledit orifice complémentaire, tout en autorisant une rétractation pour libérer les deux éléments.

Une telle solution est décrite en particulier dans le document WO 01/51257.

Une solution similaire est décrite dans le document US-A-5462380. Ce document divulgue un dispositif de verrouillage entre deux tubes télescopiques comprenant, pour le verrouillage, une lame élastique portée par un premier tube et munie à son extrémité d'un plot qu'elle sollicite dans un orifice complémentaire prévu dans le deuxième tube. Pour le déverrouillage, le document US-A-5462380 divulgue un levier pivotant qui lorsqu'il est actionné rétracte la lame élastique et le plot solidaire de celle-ci.

Une telle solution est acceptable dans certains environnements non agressifs.

Cependant, dans le domaine de la peinture en particulier, la demanderesse a constaté que les solutions connues, précédemment évoquées ne donnent pas totalement satisfaction du fait que les solvants utilisés en association avec les peintures dégradent très rapidement les matériaux thermoplastiques et que, de ce fait, les languettes pré-citées portant le plot de verrouillage n'assurent plus le déplacement élastique souhaité entre, d'une part, la position de repos et verrouillage et, d'autre part, la position provisoire rétractée de libération.

La présente invention a maintenant pour objectif de proposer de nouveaux moyens permettant de perfectionner l'état de la technique.

La présente invention propose à cet effet un dispositif comprenant deux éléments tubulaires de diamètres complémentaires propre à un engagement télescopique, l'un des éléments tubulaires comprenant au moins un orifice, et l'autre élément tubulaire comprenant au moins une languette venue de matière et qui porte un plot en saillie adapté pour pénétrer dans l'orifice lors de l'engagement télescopique des deux éléments, et un élément de commande en prise avec la languette pour déplacer positivement sur commande la languette, entre une position de verrouillage dans laquelle le plot fait saillie pour pénétrer dans l'orifice et une position rétractée, caractérisé par le fait que l'élément de commande est également adapté pour déplacer positivement sur commande la languette entre ladite position rétractée et la position de verrouillage.

Dans le cadre de la présente invention, on entend par : « déplacement positif » le fait que le déplacement de la languette est opéré par l'élément de commande, grâce à une liaison mécanique existant entre cet élément de commande et la languette et non pas grâce à l'élasticité intrinsèque de la languette, et ce à la fois dans le sens du déplacement de la position de verrouillage en saillie vers la position rétractée et dans le sens du déplacement de la position rétractée vers la position de verrouillage.

L'homme de l'art comprendra que, grâce à l'élément de commande conforme à la présente invention, le système reste parfaitement opérationnel même si l'élasticité de la languette disparaît dans le temps, sous l'effet notamment du solvant.

D'autres caractéristiques, buts et avantages de la présente invention apparaîtront à la lecture de la description détaillée qui va suivre, et en regard des dessins annexés donnés à titre d'exemples non limitatifs et sur lesquels :
- la figure 1 représente une vue latérale extérieure d'un élément conforme à la présente invention,
- la figure 2 représente une seconde vue latérale du même élément selon une vue orthogonale à la figure 1,
- la figure 3 représente une vue en coupe longitudinale du même élément selon le plan de coupe référencé III-III sur la figure 1, en position rétractée de deux languettes de verrouillage et des plots associés, de manière similaire à la figure 2,
- les figures 4, 5 et 6 représentent des vues en coupe transversale du même dispositif selon les plans de coupe référencés IV-IV, V-V et VI-VI sur la figure 3,
- les figures 7 à 17 représentent des vues d'un second mode de réalisation conforme à la présente invention, plus précisément :
   o les figures 7 et 8 représentent deux vues en perspective d'un dispositif conforme à l'invention en position rétractée d'une languette de verrouillage,
   o la figure 9 représente une vue latérale du même dispositif,
   o la figure 10 représente une vue en coupe longitudinale du dispositif en position rétractée d'une languette de verrouillage,
   o la figure 11 représente une vue en perspective similaire à la figure 8 en position en saillie de verrouillage d'une languette de verrouillage,
   o la figure 12 représente une vue latérale du même dispositif en position en saillie de la languette de verrouillage,
   o la figure 13 représente une vue en coupe longitudinale du même dispositif, similaire à la figure 10, en position en saillie de verrouillage de la languette,
   o les figures 14, 15, 16 et 17 représentent des vues en coupe transversale du dispositif selon les plans de coupe référencés XIV-XIV et XV-XV sur la figure 10, et XVI-XVI et XVII-XVII sur la figure 13.

Comme indiqué précédemment, le dispositif conforme à la présente invention comprend deux éléments tubulaires 100, 200, de diamètres complémentaires propres à un engagement télescopique.

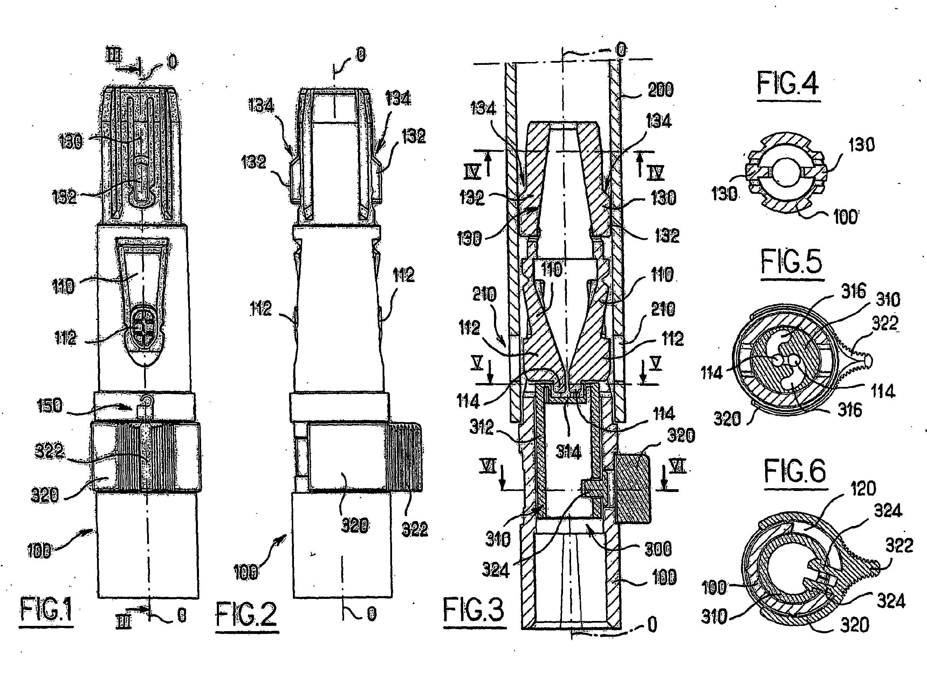

Comme on le voit sur la figure 3, l'élément tubulaire central 100 peut être légèrement effilé en direction de son extrémité libre pour faciliter l'engagement de l'élément tubulaire externe 200.

L'un des éléments 200 comprend au moins un orifice 210. Plus précisément, selon le mode de réalisation représenté sur la figure 3, l'élément tubulaire externe 200 comprend deux orifices 210 diamétralement opposés.

Cet élément 200 est seulement schématiquement représenté sur la figure 3. II peut faire l'objet de nombreux modes de réalisation. En particulier, il peut être prolongé par tout accessoire approprié, tel qu'un manche de pinceau, un manche de rouleau ou tout autre moyen équivalent. Sa structure ne sera donc pas décrite dans le détail par la suite.

L'autre élément 100 comprend au moins une languette 110 venue de matière sur l'élément tubulaire 100 et qui porte un plot 112 en saillie. Le plot 112 possède un contour ou géométrie complémentaire de l'orifice 210.

Selon le mode de réalisation non limitatif illustré sur les figures annexées, il est prévu deux languettes 110 diamétralement opposées portant chacune un plot 112.

Ainsi, comme on l'a exposé précédemment, lorsque un orifice 210 est placé en regard d'un plot 112, ce dernier peut pénétrer dans l'orifice 210 pour assurer un verrouillage entre les deux éléments 100 et 200.

Selon l'invention, le dispositif comprend en outre un élément de commande 300, en prise avec la languette 110 pour déplacer positivement celle-ci sur commande d'une part entre une position de verrouillage dans laquelle le plot 112 fait saillie pour pénétrer dans l'orifice 210 et une position rétractée telle qu'illustrée sur la figure 3 et, d'autre part, déplacer également positivement sur commande la languette entre ladite position rétractée représentée sur la figure 3 et la position de verrouillage.

Selon le mode de réalisation préférentiel représenté sur les figures annexées, l'élément de commande 300 est formé de deux pièces reliées entre elle : une pièce interne 310 et une pièce externe 320.

La pièce interne 310 est formée de préférence d'un fourreau cylindrique 312 engagé dans le volume interne de l'élément tubulaire 100 et muni, sur une extrémité, d'un disque 314. Le disque 314 possède une rampe ou gorge en creux 316 associée à chaque languette 110. La rampe 316 est non cylindrique de révolution par rapport à l'axe central O-O de la structure. La rampe 316 reçoit un doigt 114 formé à l'extrémité de la languette 110. La rampe 316 peut être rectiligne. Elle est cependant de préférence incurvée, comme illustré par exemple sur la figure 5.

La pièce externe 320 est formée de préférence d'une bague ouverte en C. La bague 320 est de préférence crantée voire munie d'une protubérance de manipulation comme schématisé sur les figures annexées sous la référence 322.

II est prévu en outre des moyens de liaison mécaniques entre les deux pièces 310 et 320. Selon le mode de réalisation particulier non limitatif représenté sur les figures annexées, ces moyens de liaison sont formés de deux éléments élastiques à denture 324 venus de matière sur la paroi cylindrique interne de la pièce 320, traversant une fenêtre 120 ménagée dans l'épaisseur de l'élément tubulaire 100, dans la direction périphérique et engagée dans une ouverture complémentaire formée sur le fourreau 310. Les éléments 324 sont engagés par clippage sur le fourreau 310. Bien entendu, tout autre moyen fonctionnellement équivalent peut être prévu pour assurer une liaison entre les pièces 310 et 320.

L'homme de l'art comprendra que l'extension périphérique de la fenêtre 120 définit le débattement angulaire autorisé de l'élément de commande 300 en rotation autour de l'axe O-O. En effet, le déplacement de cet élément, plus précisément de la bague 320, est interrompu lorsque l'un des éléments élastiques 324 vient en appui sur l'une des extrémités de la fenêtre 120.

Quand le doigt 114 est situé dans la partie radialement interne de la rampe 316, la languette 110, et par conséquent le plot 112 qu'elle porte, sont rétractés. Un déplacement longitudinal relatif selon l'axe O-O est autorisé entre les éléments 100 et 200.

Inversement, quand le doigt 114 est situé dans la partie radialement extérieure de la rampe 316, la languette 110 (et le plot 112) fait saillie radialement vers l'extérieur et peut pénétrer dans l'orifice 210 si l'élément 200 est engagé sur l'élément 100.

Dans le cadre de la présente invention, l'ensemble des éléments 100, 200, 310 et 320 sont de préférence réalisés en matériau thermoplastique.

Bien entendu, la présente invention n'est pas limitée au mode de réalisation particulier qui vient d'être décrit mais s'étend à toute variante conforme à son esprit.

On peut ainsi envisager un élément 100 pourvu d'une seule languette 110 et non pas deux languettes 110 portant chacune un plot 112 diamétralement opposées, comme illustré sur les figures 1 à 6.

Par ailleurs, l'élément 100 peut être équipé de deux niveaux de languette 110 et plot 112 associés, comme illustré par exemple sur les figures 1 à 6 pour recevoir deux types d'accessoires différents. Sur les figures 1 à 6, le premier niveau de languettes 110 et plot 112 correspond à celui précédemment décrit. Un second niveau de languette de verrouillage est prévu sur l'extrémité libre de l'élément tubulaire 100. On distingue en effet sur les figures 1 à 3, à proximité de l'extrémité axiale de l'élément tubulaire 100, deux languettes élastiques additionnelles 130 diamétralement opposées par rapport à l'axe O-O, venues de matière sur l'extrémité de l'élément 100 et portant chacune un plot 132 en saillie, adapté pour pénétrer dans un orifice complémentaire formé sur un élément 200 placé en regard.

Selon le mode de réalisation non limitatif représenté sur les figures 1 à 6 annexées, le deuxième niveau de verrouillage formé par les languettes 130 et les plots 132 associés est déplacé en position d'extension en saillie, correspondant à la position de verrouillage, grâce à l'élasticité intrinsèque de la zone de liaison entre les languettes 130 et l'élément tubulaire 100. Le déplacement radialement vers l'intérieur, en position de rétractation provisoire, est obtenu lorsqu'un élément tubulaire externe vient solliciter des rampes 134 prévues au niveau de l'interface entre les plots 132 et les languettes 130 en direction de l'extrémité libre de l'élément 100.

Le cas échéant, l'on peut prévoir deux niveaux de verrouillage répartis longitudinalement sur l'élément tubulaire 100, chacun commandé positivement par l'élément de commande 300 entre les deux positions : en saillie de verrouillage et rétractée de libération.

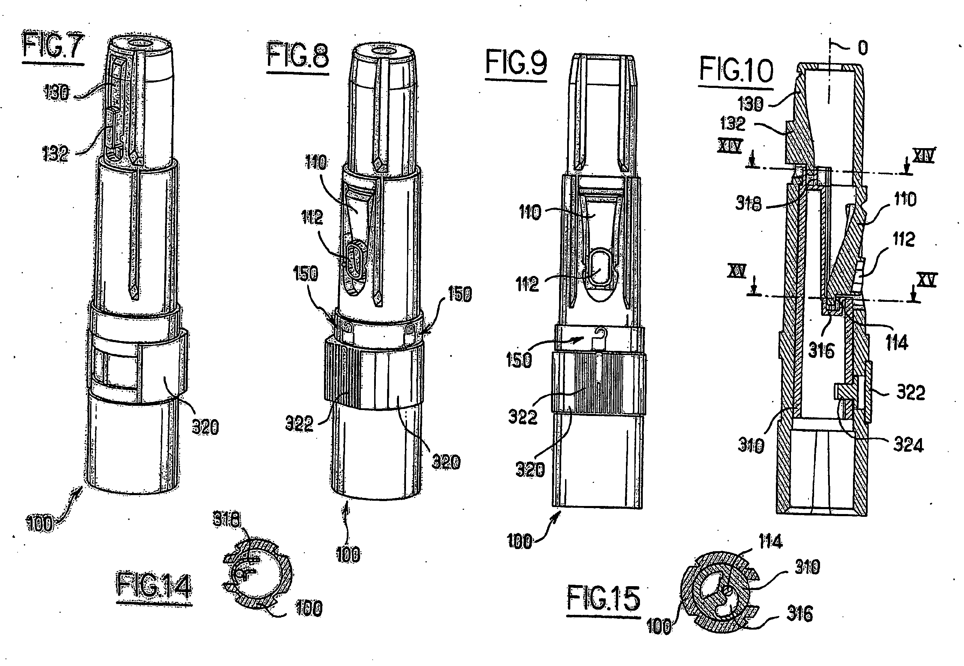

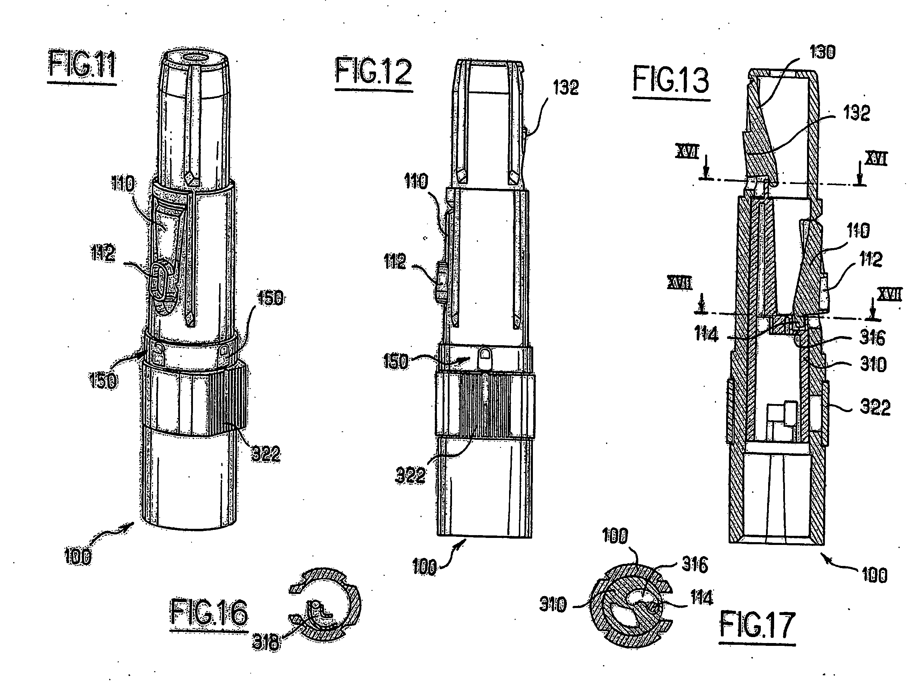

On a représenté sur les figures 7 à 17 annexées un deuxième mode de réalisation conforme à la présente invention qui ne sera pas décrit dans le détail par la suite, comprenant un premier niveau de verrouillage comprenant une languette 110 unique portant un plot 112, déplacée positivement par l'élément de commande 300 grâce à une rampe 316 et un deuxième niveau de verrouillage comprenant une languette unique 130 portant un plot 132, également déplacée positivement par une rampe 318 portée par une prolongation de la pièce interne 310 de l'élément de commande 300. Comme on le comprendra à l'examen des figures 7 à 17 annexées, de préférence, les rampes 316 et 318 sont disposées de sorte que la commande des deux languettes 110 et 130 est en opposition de phases, c'est-à-dire que lorsque l'une des languettes 110 est en position saillante de verrouillage, l'autre languette 130 est en position rétractée de libération, et inversement.

De préférence, les deux niveaux de verrouillage illustrés sur les figures annexées sont adaptées pour recevoir des manches de rouleau de peinture de dimensions différentes, le niveau de verrouillage situé le plus à l'extrémité axiale de l'élément tubulaire 100 étant adapté pour recevoir le manche d'un rouleau de peinture de petite dimension, dénommé généralement « patte de lapin », tandis que le niveau de verrouillage situé en position éloignée de l'extrémité axiale de l'élément tubulaire 100 est destiné à recevoir le manche d'un rouleau de peinture de plus grande dimension.

Pour le reste, la structure et le fonctionnement général du deuxième mode de réalisation représenté sur les figures 7 à 17 reste globalement conforme à celui décrit précédemment en regard des figures 1 à 6. Ce second mode de réalisation ne sera donc pas décrit dans le détail par la suite.

Selon une autre caractéristique avantageuse de l'invention, il peut être prévu des marquages, tel qu'illustré sur les figures 1, 8, 9, 11 et 12, sous la référence 150, pour identifier les positions de la bague 320 correspondant respectivement à une position verrouillée et une position de libération, afin de faciliter l'utilisation du dispositif.

On a décrit précédemment un élément tubulaire 100 portant l'élément de commande 300 et les languettes de verrouillage 100 munies de plots 112, associé à une perche et un élément tubulaire externe 200, formant le manche d'un rouleau de peinture. En variante on peut prévoir que l'élément tubulaire externe 200 constitue une perche, et que les languettes de verrouillage 110 portant des plots 112 et l'élément de commande 300 associé, soient solidaires de l'embout ou accessoire tel que le manche d'un support d'un rouleau de peinture.

Par ailleurs, on a décrit précédemment une liaison mécanique entre les languettes 110 et l'élément de commande 300, formée d'une rampe en creux 316 sur le moyen de commande 300 recevant un doigt en saillie 114 lié à une languette 110. Inversement cette liaison mécanique pourrait être formée par une gorge en creux formée sur l'extrémité axiale des languettes 110 et recevant un doigt en saillie lié à la pièce interne 310 de l'élément de commande 300.

## Revendications

1. Dispositif comprenant deux éléments tubulaires (100, 200) de diamètres complémentaires, propres à un engagement télescopique, l'un des éléments tubulaires (200) comprenant au moins un orifice (210) et l'autre élément tubulaire (100) comprenant au moins une languette (110) venue de matière et qui porte un plot (112) en saillie, adapté pour pénétrer dans l'orifice (210) lors de l'engagement télescopique des deux éléments (100, 200), et un élément de commande (300) en prise avec la languette (110) pour déplacer positivement sur commande la languette (110), entre une position de verrouillage, dans laquelle le plot (112) fait saillie pour pénétrer dans l'orifice (210), et une position rétractée, **caractérisé par le fait que** l'élément de commande est également adapté pour déplacer positivement sur commande la languette entre ladite position rétractée et la position de verrouillage.

2. Dispositif selon la revendication 1 **caractérisé par le fait que** l'un des éléments (200) comporte deux orifices (210) diamétralement opposés, et l'autre élément est muni de deux languettes de verrouillage (110) portant chacune un plot (112) apte à pénétrer dans les deux orifices (210) précités.

3. Dispositif selon l'une des revendications 1 ou 2 **caractérisé par le fait que** l'élément de commande possède au moins une rampe (316) non cylindrique de révolution, apte à déplacer mécaniquement la languette (110) lors d'une rotation dudit élément de commande (300).

4. Dispositif selon la revendication 3 **caractérisé par le fait que** la rampe (316) est incurvée.

5. Dispositif selon l'une des revendications 1 ou 4 **caractérisé par le fait que** l'élément de commande (300) est formé par la combinaison de deux pièces : une pièce (310) située à l'intérieur d'un élément tubulaire (100) et coopérant mécaniquement avec la languette (110), et une pièce externe (320) accessible pour une manipulation et reliée à la pièce interne (310) par des éléments de liaison (324) radiaux situés dans une fenêtre (120) formée dans l'épaisseur de l'élément tubulaire (100).

6. Dispositif selon la revendication 5 **caractérisé par le fait que** ladite fenêtre limite le déplacement angulaire de l'élément de commande (300).

7. Dispositif selon l'une des revendications 1 à 6 **caractérisé par le fait qu'**il comprend deux niveaux de languettes (110, 134) sur un élément tubulaire (100), adapté pour la fixation d'éléments complémentaires (200) de dimensions différentes.

8. Dispositif selon l'une des revendications 1 à 7 **caractérisé par le fait qu'**il est réalisé intégralement en matériau thermoplastique.

9. Dispositif selon l'une des revendications 1 à 8 **caractérisé par le fait qu'**il comporte des marquages (150) matérialisant les positions verrouillée et déverrouillée de l'élément de commande (300).

10. Application du dispositif conforme à l'une des revendications 1 à 9 pour la fixation du manche d'un support de rouleau de peinture sur l'extrémité d'une perche de rallonge.

## Claims

1. A device comprising two tubular members (100, 200) of complementary diameters, specific to telescopic engagement, one of the tubular members (200) comprising at least one orifice (210) and the other tubular member (100) comprising at least one tab (110) made in the same material and which bears a protruding stud (112), adapted for penetrating into the orifice (210), during telescopic engagement of both members (100, 200) and a control member (300) engaged with the tab (110) in order to positively move on command the tab (110) between a locking position, in which the stud (112) protrudes in order to penetrate into the orifice (210), and a retracted position, **characterized by** the fact that the control member is also adapted for positively moving on command the tab between said retracted position and the locking position.

2. The device according to claim 1, **characterized by** the fact that one of the members (200) includes two diametrically opposite orifices (210), and the other member is provided with two locking tabs (110) each bearing a stud (112) capable of penetrating into both aforementioned orifices (210).

3. The device according to any of claims 1 or 2, **characterized by** the fact that the control member has at least one non-cylindrical axisymmetrical ramp (316), capable of mechanically moving the tab (110) during a rotation of said control member (300).

4. The device according to claim 3, **characterized by** the fact that the ramp (316) is curved.

5. The device according to any of claims 1 or 4, **characterized by** the fact that the control member (300) is formed by the combination of two parts: one part (310) located inside a tubular member (100) and mechanically cooperating with the tab (110), and an external part (320) accessible for handling and connected to the internal part (310) through radial connecting members (324) located in a window (120) formed in the thickness of the tubular member (100).

6. The device according to claim 5, **characterized by** the fact that said window limits the angular displacement of the control member (300).

7. The device according to any of claims 1 to 6, **characterized by** the fact that it comprises two levels of tabs (110, 134) on a tubular member (100), adapted for attaching complementary members (200) of different dimensions.

8. The device according to any of claims 1 to 7, **characterized by** the fact that it is entirely made in thermoplastic material.

9. The device according to any of claims 1 to 8, **characterized by** the fact that it includes markings (150) materializing the locked and unlocked positions of the control member (300).

10. An application of the device according to any of claims 1 to 9 for attaching the handle of a paint roller support onto the end of an extension pole.

## Patentansprüche

1. Vorrichtung umfassend zwei rohrförmige Elemente (100, 200) mit komplementären Durchmessern, die zu einem teleskopischen Eingriff geeignet sind, wobei das eine der rohrförmigen Elemente (200) wenigstens eine Öffnung (210) umfasst, und wobei das andere rohrförmige Element (100) wenigstens eine Lasche (110) umfasst, die aus demselben Material ist und die vorspringend einen Kontakt (112) trägt, der ausgelegt ist, um in die Öffnung (210) beim teleskopischen Eingriff der beiden Elemente (100, 200) einzudringen, sowie ein Steuerelement (300) in Eingriff mit der Lasche (110), um auf Befehl die Lasche (110) formschlüssig zwischen einer Verriegelungsposition, in der der Kontakt (112) vorsteht, um in die Öffnung (210) einzudringen, und einer zurückgezogenen Position zu bewegen,
**dadurch gekennzeichnet, dass** das Steuerelement auch dazu ausgelegt ist, die Zunge zwischen der zurückgezogenen Position und der Verriegelungsposition auf Befehl formschlüssig zu bewegen.

2. Vorrichtung gemäß Anspruch 1, **dadurch gekennzeichnet, dass** das eine der Elemente (200) zwei diametral gegenüberliegende Öffnungen (210) umfasst, und das andere Element mit zwei Verriegelungslaschen (110) versehen ist, von denen jede einen Kontakt (112) trägt, der geeignet ist, in die beiden Öffnungen (210) einzudringen.

3. Vorrichtung gemäß einem der Ansprüche 1 oder 2, **dadurch gekennzeichnet, dass** das Steuerelement wenigstens eine nichtzylindrische Drehrampe (316) besitzt, die geeignet ist, mechanisch die Lasche (110) bei einer Rotation des Steuerelements (300) zu bewegen.

4. Vorrichtung gemäß Anspruch 3, **dadurch gekennzeichnet, dass** die Rampe (316) gekrümmt ist.

5. Vorrichtung gemäß einem der Ansprüche 1 bis 4, **dadurch gekennzeichnet, dass** das Steuerelement (300) durch die Kombination zweier Stücke gebildet ist: ein Stück (310), das im Inneren eines rohrförmigen Elements (100) liegt und mechanisch mit der Lasche (110) zusammenwirkt, und ein äußeres Stück (320), das für eine Bedienung zugänglich ist und mit dem Innenstück (310) durch radiale Verbindungselemente (324) verbunden ist, die in einer Fenster (120) liegen, die in der Dicke des rohrförmigen Elements (100) gebildet ist.

6. Vorrichtung gemäß Anspruch 5, **dadurch gekennzeichnet, dass** das Fenster die Winkelbewegung des Steuerelements (300) begrenzt.

7. Vorrichtung gemäß einem der Ansprüche 1 bis 6, **dadurch gekennzeichnet, dass** sie zwei Laschenhöhen (110, 134) auf einem rohrförmigen Element (100) umfasst, das für die Befestigung komplementärer Elemente (200) mit unterschiedlichen Abmessungen ausgelegt ist.

8. Vorrichtung gemäß einem der Ansprüche 1 bis 7, **dadurch gekennzeichnet, dass** sie einstückig aus thermoplastischem Material hergestellt ist.

9. Vorrichtung gemäß einem der Ansprüche 1 bis 8, **dadurch gekennzeichnet, dass** sie Markierungen (150) umfasst, die die verriegelte Position und entriegelte Position des Steuerelements (300) verwirklichen.

10. Verwendung der Vorrichtung gemäß einem der Ansprüche 1 bis 9 zur Befestigung des Griffs eines Malerrollenträgers auf dem Ende einer Verlängerungsstange.
